(19) **Europäisches Patentamt**

**European Patent Office**

**Office européen des brevets**

(11) **EP 1 238 891 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(51) Int Cl.$^7$: **B62D 15/02**

(21) Anmeldenummer: **01129287.7**

(22) Anmeldetag: **13.12.2001**

(54) **Lenkwinkelsensor**

Steering angle sensor

Capteur de l'angle de braquage

(84) Benannte Vertragsstaaten:
**DE ES FR GB IT**

(30) Priorität: **06.03.2001 DE 10110785**

(43) Veröffentlichungstag der Anmeldung:
**11.09.2002 Patentblatt 2002/37**

(73) Patentinhaber: **Valeo Schalter und Sensoren GmbH**
**74321 Bietigheim-Bissingen (DE)**

(72) Erfinder:
• **Ruff, Achim**
**74354 Besigheim (DE)**

• **Wigger, Bernd**
**74366 Kirchheim (DE)**

(74) Vertreter: **Bulling, Alexander, Dr.**
**Dreiss, Fuhlendorf, Steimle & Becker,**
**Patentanwälte**
**Postfach 10 37 62**
**70032 Stuttgart (DE)**

(56) Entgegenhaltungen:
**EP-A- 1 018 466          EP-A- 1 074 452**
**DE-A- 19 712 869**

**Beschreibung**

Die Erfindung betrifft einen Lenkwinkelsensor mit einer drehbar gelagerten, den Drehwinkel des Lenkrades wiedergebenden Codescheibe, mit einer den Code der Codescheibe abtastenden Abtasteinheit zur Bestimmung der Lenkwinkelstellung des Lenkrades bzw. der Lenksäule innerhalb einer Umdrehung, mit einem mit der Lenksäule oder der Codescheibe mechanisch gekoppelten Zähleinheit zur Zählung der vollen Umdrehungen des Lenkrades bzw. der Lenksäule gegenüber vollen Umdrehungen des Lenkrades bzw. der Lenksäule gegenüber einer Nulllage, wobei die Zähleinheit ein Zählrad und die Winkelstellung des Zählrades bestimmende Sensoren aufweist, und mit einer Auswerteinheit zur Auswertung des absoluten Lenkradwinkels. Im Nachfolgenden wird unter absolutem Lenkradwinkel die Winkelsumme der von den Umdrehungen des Lenkrades bzw. der Lenksäule und der Drehwinkel des Lenkrades innerhalb einer vollen Umdrehung gegenüber einer Nulllage verstanden.

Derartige Lenkwinkelsensoren finden beispielsweise als Regeleinrichtung zur Regelung der Fahrstabilität von Fahrzeugen Verwendung.

Um die insgesamt mögliche Schwenkbewegung der lenkenden Fahrzeugräder durchzuführen, muss das Lenkrad mehrere Umdrehungen machen. Zur eindeutigen Bestimmung des Schwenkwinkels der eingelenkten Fahrzeugräder ist es deshalb nicht nur wichtig, den Drehwinkel des Lenkrades innerhalb einer Umdrehung zu kennen, sondern es muss auch die Anzahl der Umdrehungen des Lenkrades bzw. der Lenksäule gegenüber einer Nulllage bekannt sein.

Aus der DE 196 01 965 A1 ist eine Zähleinheit zur Zählung der vollen Umdrehungen des Lenkrades in Form eines Schrittschaltwerkes bekannt. Das Schrittschaltwerk schaltet die Abhängigkeit von der Umdrehung des Lenkrades bzw. der Lenksäule schrittweise vorwärts oder rückwärts, so dass aus der Anzahl der Schritte letztendlich die Zahl der Umdrehungen des Lenkrades bzw. der Lenksäule gegenüber einer Nullstellung ermittelt werden kann. Nachteil eines solchen Standes der Technik ist, dass die Weiterschaltung des Schrittschaltwerks Geräusche verursacht. Diese Geräusche können sich störend auf insbesondere den Fahrzeuglenker auswirken. Außerdem benötigt das Schrittschaltwerk eine nicht zu vernachlässigende Bauhöhe gegenüber der vorzugsweise flach ausgebildeten Codescheibe.

Aus der EP 1 074 452 A2 ein gattungsgemäßer Drehwinkelsensor bekannt geworden, bei dem eine erste Codescheibe den Drehwinkel des Lenkrades innerhalb einer Lenkradumdrehung und eine zweite Codescheibe die volle Anzahl der Drehungen des Lenkrades bzw. der ersten Codescheibe erfasst. Die Codescheiben liegen in einer Ebene, wobei die eine Codescheibe mittels eines Untersetzungsgetriebes von der anderen Codescheibe angetrieben wird.

Aus der EP 1 018 466 A2 ist ein Drehwinkelsensor bekannt geworden, bei dem mit einer ersten und einer zweiten Magnetanordnungen der Feinwinkel innerhalb einer Umdrehung der Lenksäule und mittels einer dritten Magnetanordnung der Grobwinkel, der sich aus der Winkelstellung des Lenkrades gegenüber einer Nulllage unter Berücksichtigung mehrerer Umdrehungen des Lenkrades ergibt, erfasst wird. Die Magnete der ersten beiden Magnetanordnungen sind auf einer über eine Schneckengetriebe mit der Lenkspindel verbundenen, drehbar gelagerten Welle angeordnet. Der Magnet der dritten Magnetanordnung ist über einen Gewindeabschnitt der Welle nicht drehbar, sondern in axialer Richtung verschiebbar angeordnet.

Der vorliegenden Erfindung liegt die Aufgabe zugrunde, einen Lenkwinkelsensor bereitzustellen, der geräuschfrei arbeitet und klein baut.

Zur Lösung der Aufgabe wird ein Lenkwinkelsensor mit den Merkmalen des Anspruchs 1 vorgeschlagen.

Die Erfindung hat den Vorteil, dass über die konstante und gleichförmige Übersetzung gewährleistet wird, dass keine Schaltgeräusche auftreten. Der Antrieb des Zählrades erfolgt vorzugsweise unmittelbar. Außerdem kann das Zählrad entsprechend der Codescheibe flach ausgebildet werden, wobei vorteilhafterweise die Codescheibe und das Zählrad in einer Ebene liegen. Der absolute Lenkradwinkel wird von der Auswerteinheit aus der Winkelstellung der Codescheibe und der Winkelstellung des Zählrades bestimmt. Bei der Erfindung ist vorgesehen, dass die Ausgangssignale der Sensoren sinusund/oder cosinusförmig sind. Über bekannte mathematische Funktionen, beispielsweise dem Cordic-Algorithmus, kann aus derartigen Signalen der Winkel des Zählrades bestimmt werden. Ferner sieht das Zählrad zwei Winkelsegmente mit jeweils 180° vor, wobei im Phasenversatz von 90° zueinander angeordnete Sensoren das Zählrad bzw. die sich ändernden Winkelsegmente erfassen. Die Winkelsegmente weisen unterschiedliche Polungen auf, wobei die Sensoren dann beispielsweise analoge Magnetfeldsensoren sind. Dies hat den Vorteil, dass die Zähleinheit sehr klein und mit sehr wenigen, analogen - und damit kostengünstigen - Bauteilen auskommt.

Bei einer besonders bevorzugten Ausführungsform der Erfindung ist vorgesehen, dass das Zählrad als Zahnrad, Reibrad oder als Zugrad eines Zahnrad-, Reibrad- oder Zugmittelgetriebes ausgebildet ist. Vorzugsweise reibt oder kämmt sich das Zählrad unmittelbar mit der Codescheibe, wodurch weitere Bauraum beanspruchende Teile nicht erforderlich sind.

Die eingangs genannte Aufgabe wird außerdem durch ein Verfahren gemäß Anspruch 6 gelöst.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:

Fig. 1:     eine schematische Darstellung eines erfindungsgemäßen Lenkwinkelsensors;

Fig. 2:     den Phasenverlauf der Sensorsignale der Zähleinheit gemäß Fig. 1; und

Fig. 3:     ein Diagramm mit verschiedenen Winkelverläufen.

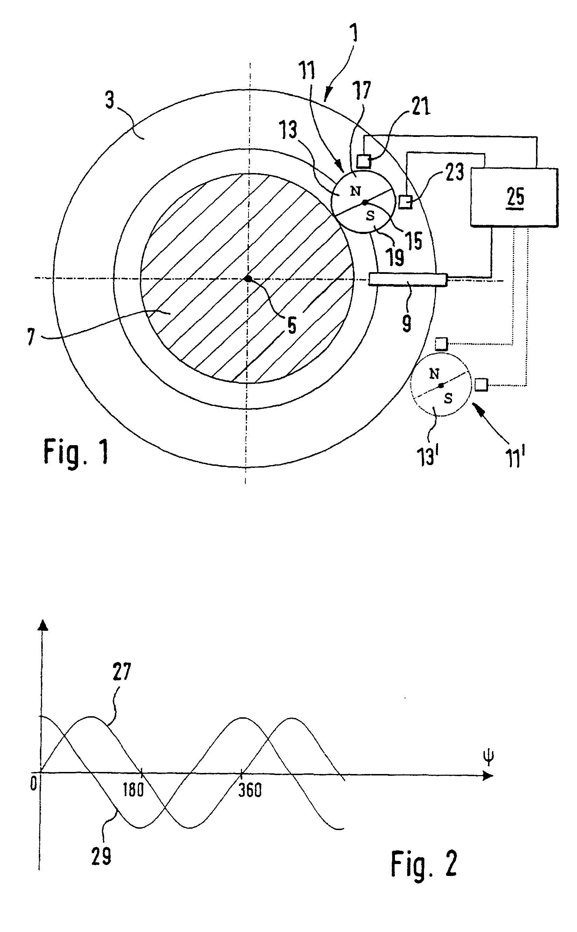

In Fig. 1 ist ein erfindungsgemäßer Lenkwinkelsensor 1 schematisch in Draufsicht dargestellt. Der Lenkwinkelsensor 1 umfasst eine flach ausgebildete Codescheibe 3, die senkrecht zur Lenkachse 5 einer im Schnitt dargestellten Lenksäule 7 angeordnet ist. Die Codescheibe 3 ist mit der Lenksäule 7 drehfest verbunden, wobei die Lenksäule 7 ihrerseits mit einem nicht dargestellten Lenkrad eines Kraftfahrzeuges drehfest verbunden ist.

Auf der Codescheibe 3 ist ein nicht weiter dargestellter Code angeordnet, welcher von einer Abtasteinheit 9 zur Bestimmung des Winkels φ des Lenkrades bzw. der Codescheibe 3 innerhalb einer Umdrehung des Lenkrades dient.

In der Fig. 1 ist weiterhin eine Zähleinheit 11 dargestellt, die mit der Lenksäule 7 mechanisch gekoppelt ist. Die Zähleinheit 11 dient zur Zählung der vollen Umdrehungen des Lenkrades bzw. der Lenksäule 7 bzw. der Codescheibe 3 gegenüber einer Nulllage. Die Zähleinheit 11 weist ein Zählrad 13 auf, das um eine Achse 15 drehbar gelagert ist. Das Zählrad 13 ist hierbei so angeordnet, dass es bei einer Drehung des Lenkrades bzw. der Lenksäule 7 mit einer konstanten und gleichförmigen Übersetzung angetrieben wird. Vorzugsweise ist das Zählrad 13 als Zahnrad ausgebildet, welches in ein die Lenksäule 7 umlaufendes Gegenzahnrad kämmt. Alternativ dazu ist denkbar, dass das Zählrad als Reibrad ausgebildet ist, dessen Stirnseite an der Mantelfläche der Lenksäule 7 abläuft. Ferner ist denkbar, dass das Zählrad 13 mit der Lenksäule 7 über ein Zugmittelgetriebe mit der Lenksäule 7 verbunden ist.

Bei einer anderen Ausführungsform der Erfindung, die in Fig. 1 gestrichelt angedeutet ist, läuft das Zählrad 13' der Zähleinheit 11' nicht an der Lenksäule 7, sondern an der Stirnseite der Codescheibe 3 ab.

Das Zählrad 13 weist zwei Winkelsegmente 17 und 19 über jeweils 180° auf, wobei das Winkelsegment 17 als Nord-Pol und das Winkelsegment 19 als Süd-Pol polarisiert ist. Die Zähleinheit 11 umfasst ferner zwei um 90° zueinander phasenversetzte Magnetfeldsensoren 21 und 23, die die Winkelstellung 4 des Zählrads 13 erfassen.

Die beiden Sensoren 21 und 23 sowie der Sensor 9 sind über Leitungen mit einer Auswerteeinheit 25 verbunden. Die Auswerteeinheit 25 bestimmt über die Winkelstellung φ der Codescheibe 3 und über die Winkelstellung ψ des Zählrades 13 den absoluten Lenkradwinkel ω.

Da das Zählrad 13 mit einer konstanten und gleichförmigen Übersetzung von der Lenksäule 7 angetrieben wird, treten keine störenden Betriebsgeräusche des Lenkwinkelsensors 1 auf.

Fig. 2 zeigt die beiden Sensorsignale 27 und 29 der beiden Sensoren 21 und 23 über den Winkel ψ des Zählrades 13. Aufgrund der phasenversetzten Anordnung der beiden Sensoren 21 und 23 sind die beiden Sensorsignale 27 und 29 ebenfalls um 90° phasenversetzt. Aus den Signalen 27 und 29 kann die Winkelstellung des Zählrades 13 jederzeit eindeutig aus beispielsweise nachfolgend beschriebener mathematischen Beziehungen ermittelt werden.

Mathematischen Beziehungen:

| $\omega$... | Lenkradwinkel | $[-\omega_{max}, +\omega_{max}]$ | [Grd] |
|---|---|---|---|
| $\varphi$... | Codescheibenwinkel | $[0°, 360°]$ | [Grd] |
| $\psi$... | Zählradwinkel | $[0°, 360°]$ | [Grd] |
| $\psi_\Delta$.. | Differenz des Zählradwinkels nach einer vollen Codescheibenumdrehung | | [Grd] |
| $i$... | Umdrehungszahl der Codescheibe (ganzzahlig) | | [ - ] |
| $j$... | Umdrehungszahl des Zählrads (ganzzahlig) | | [ - ] |
| $\bar{n}$ ... | Anzahl Zähne auf großem Zählrad | | [ - ] |
| $\bar{m}$ .. | Anzahl Zähne auf kleinem Zählrad | | [ - ] |

Der Lenkradwinkel ω hat aufgrund der Periodizität folgende Beziehung zum Codescheibenwinkel φ

$$(1) \qquad \omega = \varphi + i \cdot 360 \qquad \text{anders ausgedrückt:} \qquad \varphi = \omega \bmod 360$$

Das Übersetzungsverhältnis der Zahnräder läßt sich auch mit ganzzahligen Werten n und m folgendermaßen

darstellen:

$$(2) \qquad \frac{n}{m} = \frac{\bar{n}}{\bar{m}} \qquad \text{mit ggT}(n, m) = 1.$$

D. h. der Bruch n/m läßt sich nicht weiter kürzen.

Mit den Zusammenhängen des Übersetzungsverhältnisses der Zahnräder ergibt sich für den Lenkradwinkel ω folgende Beziehung zum Zählradwinkel ψ:

$$(3) \qquad \omega = \frac{m}{n}(\psi + j \cdot 360) \qquad \text{anders ausgedrückt:}$$

$$\psi = \frac{n}{m}\omega \bmod 360$$

Beide Beziehungen zusammen führen auf die folgende Gleichung:

$$(4) \qquad n \cdot i - m \cdot j = \frac{m \cdot \psi - n \cdot \varphi}{360}$$

Da auf der linken Seite nur ganzzahlige Werte stehen, muß auch die rechte Seite ganzzahlig sein. Unter Verwendung des ganzzahligen Faktors k

$$(5) \qquad k := \frac{m \cdot \psi - n \cdot \varphi}{360}$$

erhält man also eine einfache lineare diophantische Gleichung

$$(6) \qquad n \cdot i - m \cdot j = k$$

mit gegebenen Werten n, m und k und den gesuchten Werten i und j.

Diese ist genau dann lösbar - mit unendlich vielen Lösungen - wenn gilt: **ggT**(n,m) | k. Diese Bedingung ist immer erfüllt, da man ja in (2) gefordert hatte das **ggT**(n, m) = 1. Zur Lösung läßt sich z. B. der bekannte euklidische Algorithmus verwenden. Aus den unendlich vielen Lösungen wird die verwendet, bei der der Wert i im gesuchten Bereich liegt.

Bei Verwendung von gemessenen Größen $\hat{\varphi}$ und $\hat{\psi}$ wird der Faktor k im allgemeinen nicht ganzzahlig sein. Man erhält statt dessen einen reellen Wert k

$$(7) \qquad \hat{k} := \frac{m \cdot \hat{\psi} - n \cdot \hat{\varphi}}{360}$$

Durch Rundung auf die nächstgelegene Ganzzahl erhält man dann den exakten Wert für k, falls der Fehler in $\hat{\varphi}$ und $\hat{\psi}$ nicht zu groß ist:

$$(8) \qquad \|\hat{k} - k\| = \left\|\frac{m \cdot \Delta\psi - n \cdot \Delta\varphi}{360}\right\| < 0,5 \text{ mit } \Delta\varphi := \hat{\varphi} - \varphi \text{ und } \Delta\psi := \hat{\psi} - \psi,$$

bzw.

$$(9) \qquad |m \cdot \Delta\psi - n \cdot \Delta\varphi| < 180.$$

Damit dies immer erfüllt ist, muß für die maximalen Fehler $\Delta\varphi_{max}$ und $\Delta\psi_{max}$ gelten

$$(10) \qquad m \cdot |\Delta\psi_{max}| + n \cdot |\Delta\varphi_{max}| < 180.$$

D. h. das Übersetzungsverhältnis kann nicht beliebig festgelegt werden, sondern bei gegebener Meßgenauigkeit des Codescheiben- und des Zählradwinkels müssen n und m die Ungleichung (10) erfüllen.

Eine weitere Einschränkung an das Übersetzungsverhältnis ergibt sich aus dem geforderten maximalen Winkelbereich $[-\omega_{max}, +\omega_{max}]$. Für die Differenz des Zählradwinkels nach einer vollen Codescheibenumdrehung erhält man aus (3)

$$(11) \quad \psi_\Delta = \left(\frac{n}{m}\, 360\right) \bmod 360 \, .$$

Für den maximalen Winkelbereich erhält man damit die folgende Ungleichung:

$$(12) \quad \omega_{max} \leq \max\left(\frac{360^2}{2 \cdot \psi_\Delta} \, , \, \frac{360^2}{2 \cdot (360 - \psi_\Delta)}\right)$$

Beispiel:

Das Umdrehungsverhältnis sei gegeben über

$$\bar{n} = 51, \ \bar{m} = 18$$

also erhalten wir für n und m

$$n = 17, m = 6$$

Bei einem maximalen Fehler für den Codescheibenwinkel $|\Delta\varphi_{max}| < 1{,}5$ muß der maximale Fehler des Zählradwinkels nach (10) also $|\Delta\psi_{max}| < 25{,}75$ sein.

Aus $\psi_\Delta = 300$ ergibt sich mit (12) für den maximalen Winkelbereich $\omega_{max} \leq 1080$.

Die Lösungen der linearen diophantischen Gleichung

$$17 \cdot i - 6 \cdot j = k$$

ergeben sich mit beliebigem ganzzahligen t als

$$i = -k + t \cdot 6$$

$$j = -3 \cdot k + t \cdot 17$$

Wählt man t jeweils so, daß gilt $-3 \leq i < 3$, ergibt sich zu jedem k die gesuchte Umdrehungszahl der Codescheibe.

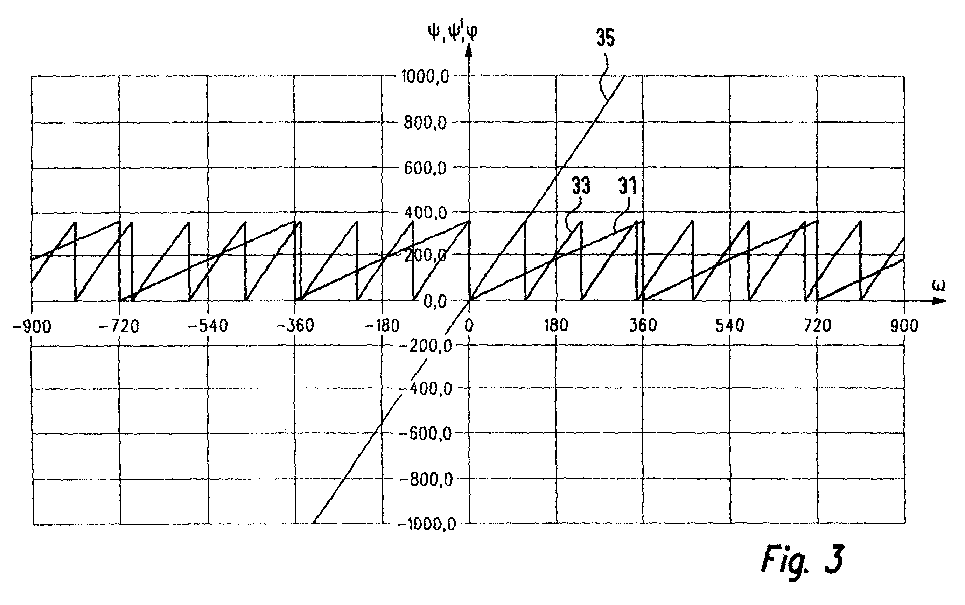

Das in Fig. 3 dargestellte Diagramm gibt entlang der Abszisse den absoluten Lenkradwinkel $\omega$ an. Von einer Nulllage aus kann das Lenkrad bzw. die Lenksäule 7 in beide Richtungen jeweils um 2,5 Drehungen umdreht werden. Dies entspricht einem Wertbereich des absoluten Lenkradwinkels $\omega$ von null bis +/-900 .

Der Winkel $\varphi$ der Codescheibe 3 innerhalb einer Umdrehung des Lenkrades ist in dem Diagramm als flach ausgebildete Sägezahnlinie 31 dargestellt. Wird von der in dem Diagramm mittig angeordneten Nulllage das Lenkrad in positive Richtung gedreht, so steigt der Winkel $\varphi$ der Codescheibe von null auf 360° an. Bei einem absoluten Lenkradwinkel ω von 360° beträgt der auf der Ordinate ablesbare Wert der Winkelstellung φ der Codescheibe 3 ebenfalls 360 . Bei Überschreiten eines absoluten Lenkradwinkels ω von 360° fällt der Winkel φ der Codescheibe 3 auf 0° und wächst bis zu einem absoluten Lenkradwinkel ω von 720° erneut auf einen Wert von 360 . Entsprechend verhält sich der Winkel φ der Codescheibe 3 bei Drehen des Lenkrades in negative Richtung.

Der Winkel ψ des Zählrades 13 innerhalb einer Umdrehung des Zählrades 13 ist in dem Diagramm als steil ausgebildete Zählsägezahnlinie 33 dargestellt. Das Übersetzungsverhältnis zwischen der Codescheibe 3 und dem Zählrad 11 beträgt n = 360/1140, also ca. n = 0,316. Bei einer Drehung der Codescheibe 3 bzw. des Lenkrads von 113,68° dreht sich das Zählrad 13 demnach einmal. Der Wert des Winkels ψ innerhalb einer vollen Umdrehung des Zählrads 13 kann an der Ordinate abgelesen werden.

In dem Diagramm ist weiterhin der absolute aufsummierte Winkel ψ' des Zählrads 13 ausschnittsweise als Gerade 35 dargestellt. Ausgehend von der Nulllage weist der absolute Winkel ψ' des Zählrads 13 nach einer vollen Umdrehung der Codescheibe 3 aufgrund des entsprechenden Übersetzungsverhältnisses n einen Wert von 1140° auf. Der Wert des absoluten Winkels ψ' kann ebenfalls der Ordinate entnommen werden.

Durch die spezielle Übersetzung des an der Lenksäule 7 ablaufenden Zählrades 13 kann zwischen der Winkelstellung φ der Lenksäule 7 bzw. der Codescheibe 3, die über die Abstasteinheit 9 bestimmbar ist, und der Winkelstellung ψ des Zählrades 13 ein mathematischer Bezug hergestellt werden. Über diesen mathematischen Bezug ist es möglich, auf die volle Lenkradumdrehung bzw. den absoluten Lenkradwinkel ω zu schließen.

**Patentansprüche**

1. Lenkwinkelsensor (1), mit einer drehbar gelagerten, den Drehwinkel des Lenkrades wiedergebenden Codescheibe (3), mit einer den Code der Codescheibe (3) abtastenden Abtasteinheit (9) zur Bestimmung der Winkelstellung (φ) des Lenkrades bzw. der Lenksäule (7) innerhalb einer Umdrehung, mit einem mit der Lenksäule (7) oder der Codescheibe (3) mechanisch gekoppelten Zähleinheit (11) zur Bestimmung der vollen Umdrehungen des Lenkrades bzw. der Lenksäule (7) gegenüber einer Nulllage, wobei die Zähleinheit (11) ein Zählrad (13) und die Winkelstellung (ψ) des Zählrades (13) abtastende Sensoren (21, 23) aufweist, und mit einer Auswerteeinheit (25) zur Auswertung des absoluten Lenkradwinkels (ω) aus der Winkelstellung (φ) des Lenkrades bzw. der Lenksäule (7) und der Winkelstellung (ψ) des Zählrades (13),
wobei das Zählrad (13) bei der Drehung des Lenkrades konstant und gleichförmig von der Lenksäule (7) oder der Codescheibe (3) angetrieben wird,
wobei die Achse (5) der Codescheibe (3) parallel zur Achse (15) des Zählrads (13) angeordnet ist und
wobei die Codescheibe (3) und das Zählrad.(13) in einer Ebene liegen, **dadurch gekennzeichnet, dass** das Übersetzungsverhältnis Lenksäule (7) bzw. Codescheibe (3) zu Zählrad (13) kleiner eins ist, dass das Zählrad (13) an der Stirnseite der Codescheibe (3) abläuft, dass das Zählrad (13) zwei unterschiedliche Polungen aufweist und dass zwei im Phasenversatz zueinander angeordnete Magnetfeldsensoren (21, 23) vorgesehen sind, aus deren sinus- und/oder cosinusförmigen Ausgangssignalen die Winkelstellung (ψ) des Zählrades (13) bestimmbar ist.

2. Lenkwinkelsensor (1) nach Anspruch 1, **dadurch gekennzeichnet, dass** das Zählrad zwei Winkelsegmente (17, 19) mit jeweils 180° aufweist, wobei der Phasenversatz 90° beträgt.

3. Lenkwinkelsensor (1) nach Anspruch 2, **dadurch gekennzeichnet, dass** das Zählrad (13) als Zahnrad, Reibrad bzw. Zugrad eines Zahnrad-, Reibrad- bzw. Zugmittelgetriebes ausgebildet ist.

4. Verfahren zum Bestimmen des absoluten Lenkradwinkels (ω) eines Lenkrades, insbesondere unter Verwendung eines Lenkwinkelsensors (1) nach einem der vorhergehenden Ansprüche, **gekennzeichnet durch** folgende Schritte:

   - Erfassen der Winkelstellung (φ) des Lenkrades bzw. der Lenksäule (7) innerhalb einer Umdrehung des Lenkrades mit einer Codescheibe (3),
   - Erfassen der Winkelstellung (ψ) eines mit der Lenksäule (7) oder der Codescheibe (3) über eine konstante und gleichförmige Übersetzung gekoppelten Zählrades (13),

   wobei das Übersetzungsverhältnis Lenksäule (7) bzw. Codescheibe (3) zu Zählrad (13) kleiner eins ist, wobei die Achse (5) der Codescheibe (3) parallel zur Achse (15) des Zählrads (13) angeordnet ist, wobei die Codescheibe (3) und das Zählrad (13) in einer Ebene liegen und wobei das Zählrad (13) an der Stirnseite der Codescheibe (3) abläuft,

- Bestimmen der Winkelstellung (ψ) des zwei unterschiedliche Polungen aufweisenden Zählrades (13) über die Auswertung von sinus- und/oder cosinusförmigen Ausgangssignalen zweier im Phasenversatz zueinander angeordneten Magnetfeldsensoren (21, 23),
- Auswerten des absoluten Lenkradwinkels (ω) aus der Winkelstellung (φ) der Codescheibe (3) innerhalb einer Umdrehung des Lenkrades bzw. der Lenksäule (7) und aus der Winkelstellung (ψ) des Zählrades (13).

**Claims**

1. Steering angle sensor (1), comprising a rotatably mounted code disc (3) reproducing the angle of rotation of the steering wheel, comprising a scanning unit (9) which scans the code of the code disc (3) and is intended for determining the angular position (φ) of the steering wheel or of the steering column (7) within a revolution, comprising a counting unit (11) which is mechanically coupled to the steering column (7) or to the code disc (3) and is intended for determining the full revolutions of the steering wheel or of the steering column (7) relative to a zero position, the counting unit (11) having a counting wheel (13) and sensors (21, 23) sensing the angular position (ψ) of the counting wheel (13), and comprising an evaluation unit (25) for evaluating the absolute steering wheel angle (ω) from the angular position (φ) of the steering wheel or of the steering column (7) and the angular position (ψ) of the counting wheel (13), the counting wheel (13) being driven constantly and uniformly by the steering column (7) or the code disc (3) during the rotation of the steering wheel, the axis (5) of the code disc (3) being arranged parallel to the axis (15) of the counting wheel (13), and the code disc (3) and the counting wheel (13) lying in a plane, **characterized in that** the transmission ratio of steering column (7) or code disc (3) to counting wheel (13) is less than one, that the counting wheel (13) runs on the end face of the code disc (3), that the counting wheel (13) has two different poles and that two magnetic field sensors (21, 23) arranged phase-offset relative to one another are provided, from the sine and/or cosine output signals of which sensors the angular position (ψ) of the counting wheel (13) can be determined.

2. Steering angle sensor (1) according to Claim 1, **characterized in that** the counting wheel has two angle segments (17, 19) of in each case 180°, the phase offset being 90°.

3. Steering angle sensor (1) according to Claim 2, **characterized in that** the counting wheel (13) is in the form of a toothed wheel, friction wheel or traction wheel of a toothed gear, friction gear or traction gear.

4. Method for determining the absolute steering wheel angle (ω) of a steering wheel, in particular using a steering angle sensor (1) according to any of the preceding Claims, **characterized by** the following steps:

- determination of the angular position (φ) of the steering wheel or of the steering column (7) within a revolution of the steering wheel by means of a code disc (3),
- determination of the angular position (ψ) of a counting wheel (13) coupled to the steering column (7) or to the code disc (3) via a constant and uniform transmission, the transmission ratio of steering column (7) or code disc (3) to counting wheel (13) being less than one, the axis (5) of the code disc (3) being arranged parallel to the axis (15) of the counting wheel (13), the code disc (3) and the counting wheel (13) lying in a plane, and the counting wheel (13) running on the end face of the code disc (3),
- determination of the angular position (ψ) of the counting wheel (13) having two different poles via the evaluation of sine and/or cosine output signals of two magnetic field sensors (21, 23) arranged phase-offset relative to one another,
- evaluation of the absolute steering wheel angle (ω) from the angular position (φ) of the code disc (3) within a revolution of the steering wheel or of the steering column (7) and from the angular position (ψ) of the counting wheel (13).

**Revendications**

1. Capteur d'angle de braquage (1), comprenant un disque de code (3) logé de façon rotative et restituant l'angle de rotation du volant, une unité de balayage (9) balayant le code du disque de code (3) pour la détermination de la position d'angle (φ) du volant ou de la colonne de direction (7) à l'intérieur d'une rotation, une unité de comptage (11) couplée de façon mécanique à la colonne de direction (7) ou au disque de code (3) pour la détermination des rotations complètes du volant ou de la colonne de direction (7) par rapport à une position zéro, l'unité de comptage (11) présentant une roue de comptage (13) et des capteurs (21, 23) balayant la position d'angle (ψ) de la roue de comptage (13) et une unité d'analyse (25) pour l'analyse de l'angle de volant absolu (ω) à partir de la position d'angle (φ) du volant ou de la colonne de direction (7) et de la position d'angle (ψ) de la roue de comptage (13), la roue comptage (13) étant entraînée lors de la rotation du volant de façon constante et uniforme par la colonne de direction (7) ou le disque de code (3),

l'axe (5) du disque de code (3) étant disposé parallèlement à l'axe (15) de la roue de comptage (13) et le disque de code (3) et la roue de comptage (13) se situant dans un même plan, **caractérisé en ce que** le rapport de transmission de la colonne de direction (7) ou du disque de code (3) par rapport à la roue de comptage (13) est inférieur à 1, **en ce que** la roue de comptage (13) passe sur le côté avant du disque de code (3), **en ce que** la roue de comptage (13) présente deux polarisations différentes et **en ce qu'**il est prévu deux capteurs de champ magnétique (21, 23) disposés en décalage de phase l'un par rapport à l'autre, à partir des signaux de sortie de forme sinusoïdale et/ou cosinusoïdale desquels on peut déterminer la position angulaire (ψ) de la roue de comptage (13).

2. Capteur d'angle de braquage (1) selon la revendication 1, **caractérisé en ce que** la roue de comptage présente deux segments d'angle (17, 19) comprenant chacun 180°, et le déphasage étant de 90°.

3. Capteur d'angle de braquage (1) selon la revendication 2, **caractérisé en ce que** la roue de comptage (13) est conçue comme une roue dentée, une roue de frottement ou une roue de traction d'un engrenage à roue dentée, à roue d'engrenage ou à moyen de traction.

4. Procédé pour déterminer l'angle de volant absolu (ω) d'un volant, en particulier avec l'utilisation d'un capteur d'angle de braquage (1) selon l'une quelconque des revendications précédentes, **caractérisé par** les étapes suivantes :

- enregistrement de la position d'angle (φ) du volant ou de la colonne de direction (7) à l'intérieur d'une rotation du volant avec un disque de code (3),
- enregistrement de la position d'angle (ψ) d'une roue de comptage (13) couplée à la colonne de direction (7) ou au disque de code (3) au moyen d'un engrenage constant et uniforme, le rapport de transmission de la colonne de direction (7) ou du disque de code (3) par rapport à la roue de comptage (13) étant inférieur à 1, l'axe (5) du disque de code (3) étant disposé parallèlement à l'axe (15) de la roue de comptage (13), le disque de code (3) et la roue de comptage (13) étant situés dans un même plan et la roue de comptage (13) passant sur le côté avant du disque de code (3),
- détermination de la position d'angle (ψ) de la roue de comptage (13) présentant deux polarisations différentes au moyen de l'analyse de signaux de sortie, de forme sinusoïdale et/ou cosinusoïdale, de deux capteurs de champ magnétique (21, 23) disposés avec un déphasage l'un par rapport à l'autre,
- analyse de l'angle de volant absolu (ω) à partir de la position d'angle (φ) du disque de code (3) à l'intérieur d'une rotation du volant ou de la colonne de direction (7) et à partir de la position angulaire (ψ) de la roue de comptage (13).

Fig. 1

Fig. 2

*Fig. 3*

EP 1 238 891 B1